# EUROPÄISCHE PATENTSCHRIFT

(11) **EP 4 378 056 B1**
(45) Veröffentlichungstag und Bekanntmachung des Hinweises auf die Patenterteilung: **21.10.2026**
(21) Anmeldenummer: 22747971.4
(22) Anmeldetag: 06.07.2022
(51) Int. Cl.: H02K 5/20, H02K 5/22, H02K 9/19

(54) **STATORANORDNUNG UND VERFAHREN ZUM HERSTELLEN EINER STATORANORDNUNG**
STATOR ARRANGEMENT AND METHOD FOR MANUFACTURING A STATOR ARRANGEMENT
ENSEMBLE STATOR ET PROCÉDÉ DE FABRICATION D'UN ENSEMBLE STATOR

(30) Priorität: 29.07.2021 DE 102021208196
(43) Veröffentlichungstag der Anmeldung: 05.06.2024
(73) Patentinhaber: Robert Bosch GmbH, 70442 Stuttgart (DE)
(72) Erfinder: BUHL, Steffen, 74343 Sachsenheim-Spielberg (DE); FATDACHOW, Muzaffar, 71282 Hemmingen (DE); PECHINGER, Markus, 70372 Stuttgart (DE)
(86) Internationale Anmeldenummer: PCT/EP2022/068714
(87) Internationale Veröffentlichungsnummer: WO 2023/006364

(56) Entgegenhaltungen:
- WO-A2-2015/078459
- CN-A- 112 360 741
- DE-A1- 102019 205 751

## Beschreibung

Die Erfindung betrifft eine Statoranordnung mit einer Hochvoltschnittstelle zur Darstellung einer elektrischen Verbindung zwischen einem Stator und einer Hochvoltelektronik. Die Erfindung betrifft des Weiteren ein Verfahren zum Herstellen einer derartigen Statoranordnung.

### Stand der Technik

Aus der deutschen Offenlegungsschrift DE 10 2016 225 342 A1 ist eine Statoranordnung einer elektrischen Maschine mit einem Gehäuse und mit einem Stator bekannt, der einen Statorgrundkörper und mindestens einen Wickelkopf aufweist, wobei der Statorgrundkörper und der Wickelkopf in einem wärmeleitenden Epoxidharz vergossen sind. Weiterer Stand der Technik ist DE102019205751A1.

### Offenbarung der Erfindung

Die Erfindung ist eine Statoranordnung mit einer Hochvoltschnittstelle gemäß Anspruch 1 und das zugehörige Herstellungsverfahren gemäß Anspruch 6. Weitere Ausführungsformen der Erfindung sind in den abhängigen Ansprüchen 2 - 5 definiert. Aufgabe der Erfindung ist es, die Herstellung einer Statoranordnung mit einer Hochvoltschnittstelle zur Darstellung einer elektrischen Verbindung zwischen einem Stator und einer Hochvoltelektronik, zu vereinfachen.

Die Aufgabe ist bei einer Statoranordnung mit einer Hochvoltschnittstelle zur Darstellung einer elektrischen Verbindung zwischen einem Stator und einer Hochvoltelektronik, dadurch gelöst, dass die Hochvoltschnittstelle mit einer Zentriereinrichtung kombiniert ist, die an einer Kühlhülse zentriert ist, die einen Statoraufnahmeraum für den Stator umfasst. Die Kühlhülse dient zur Darstellung einer Kühlung für die Statoranordnung. Zur Kühlung kann ein Kühlfluid durch die Kühlhülse oder an der Kühlhülse entlang geführt werden. Der Stator umfasst zum Beispiel einen Statorgrundkörper mit Statorwicklungen, Statoreisen und Wickelköpfen. Beim Vergießen, Imprägnieren und/oder Umspritzen wird der Stator mit einem Gießharz, Imprägnierharz und/oder Kunststoffmaterial durchdrungen und umgeben. Die Hochvoltelektronik umfasst zum Beispiel einen Inverter. Der Inverter kann separat zur Statoranordnung angeordnet sein. Die Statoranordnung dient vorteilhaft zusammen mit einem Rotor zur Darstellung eines elektromotorischen Antriebs für eine Gasfördervorrichtung, insbesondere für einen Luftverdichter. Bei einer bevorzugten Ausführungsform des Luftverdichters ist die Hochvoltelektronik, insbesondere der Inverter, zusammen mit dem Stator in einem gemeinsamen Gehäuse untergebracht. Ein derartiger Luftverdichter wird auch als integrierter elektrisch angetriebener Luftverdichter bezeichnet. Die Hochvoltschnittstelle dient zur Darstellung einer elektrischen Verbindung zwischen der Hochvoltelektronik und dem elektromotorischen Antrieb, insbesondere der Statoranordnung mit dem Stator. Durch die Zentriereinrichtung wird eine Schnittstelle zwischen der Kühlhülse und dem Stator, der auch als Statoreinheit bezeichnet werden kann, geschaffen. Mit der Zentriereinrichtung kann der Stator beziehungsweise die Statoreinheit vorteilhaft voll umfänglich insbesondere an einem Außendurchmesser der Kühlhülse zentriert werden. Zur Abdichtung kann ein Pressverband zwischen der Zentriereinrichtung und der Kühlhülse verwendet werden.

Die Zentriereinrichtung umfasst einen Ringkörper, mit dem die Zentriereinrichtung an einem Ende der Kühlhülse befestigt ist. So wird eine einfache, robuste und kostengünstige Schnittstellengeometrie zwischen dem Stator beziehungsweise der Statoreinheit und der Kühlhülse bereitgestellt.

Der Ringkörper weist einen Zentrierring auf, mit dem die Zentriereinrichtung vollumfänglich an einem Außendurchmesser der Kühlhülse zentriert ist. So wird bei sehr guter Positioniergenauigkeit eine optimale Zentrierung an der Kühlhülse ermöglicht. Darüber hinaus wird eine robuste und sichere Abdichtung durch einen Pressverband und/oder durch eine zusätzliche Dichteinrichtung ermöglicht.

Der Zentrierring der Zentriereinrichtung ist kraftschlüssig mit der Kühlhülse verbunden ist. Durch einen entsprechenden Pressverband kann auf einfache Art und Weise eine hochdruckfeste Abdichtung zwischen dem Zentrierring und der Kühlhülse sichergestellt werden.

Ein weiteres bevorzugtes Ausführungsbeispiel der Statoranordnung ist dadurch gekennzeichnet, dass ein radialer O-Ring zur Abdichtung zwischen der Kühlhülse und dem Zentrierring angeordnet ist. Der O-Ring ist zum Beispiel in einer Ringnut an einem Außenumfang der Zentrierhülse aufgenommen. Der radiale O-Ring kann alternativ oder zusätzlich zu dem vorab beschriebenen Pressverband vorgesehen werden.

Ein weiteres bevorzugtes Ausführungsbeispiel der Statoranordnung ist dadurch gekennzeichnet, dass der Ringkörper vollflächig an einer Stirnfläche der Kühlhülse anliegt. Durch den stirnseitigen vollflächigen Kontakt können unerwünschte Winkelfehler vermieden werden.

Ein weiteres bevorzugtes Ausführungsbeispiel der Statoranordnung ist dadurch gekennzeichnet, dass sich ein Verbindungsabschnitt von dem Ringkörper radial nach außen erstreckt. Durch den Verbindungsabschnitt erstrecken sich elektrische Verbindungsleitungen vom Stator zu der Hochvoltelektronik. Die Verbindungsleitungen können als Stromschienen oder Kontaktzungen ausgeführt sein.

Ein weiteres bevorzugtes Ausführungsbeispiel der Statoranordnung ist dadurch gekennzeichnet, dass radial außen an einem Verbindungsabschnitt Anschlusshülsen angeordnet sind, die sich von dem Verbindungsabschnitt in axialer Richtung erstrecken. Dadurch wird das Anschließen der Hochvoltelektronik an die Statoranordnung vereinfacht.

Bei dem Verfahren gemäß Anspruch 6 zum Herstellen einer vorab beschriebenen Statoranordnung ist die oben angegebene Aufgabe alternativ oder zusätzlich dadurch gelöst, dass der Stator mit der Zentriereinrichtung an der Kühlhülse zentriert wird, bevor der Stator mit der Hochvoltschnittstelle vergossen und/oder umspritzt wird. So kann der Stator auf einfache Art und Weise sehr genau in dem Statoraufnahmeraum der Kühlhülse positioniert werden.

Die Zentriereinrichtung und die Kühlhülse sind separat handelbar.

Offenbart ist auch eine Gasfördervorrichtung, insbesondere einen Luftverdichter, zur Bereitstellung eines Gases, insbesondere zum Bereitstellen von verdichteter Luft, in einem Brennstoffzellensystem, mit einer vorab beschriebenen Statoranordnung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine perspektivische Darstellung einer Luftzuführvorrichtung mit einem Gehäuse, in welchem eine Steueranschlusseinrichtung über Stromschienen mit einer Stromanschlusseinrichtung verbunden ist;
Figur 2 eine perspektivische Darstellung einer Statoranordnung mit einer Hochvoltschnittstelle, die in eine Zentriereinrichtung integriert ist, die an einer Kühlhülse zentriert ist;
Figur 3 einer perspektivische Darstellung der Zentriereinrichtung aus Figur 2 alleine;
Figur 4 die Statoranordnung aus Figur 4 in einem Längsschnitt; und
Figur 5 einen vergrößerten Ausschnitt aus Figur 4 mit einem radialen O-Ring zwischen der Kühlhülse und einem Zentrierring der Zentriereinrichtung.

### Beschreibung der Ausführungsbeispiele

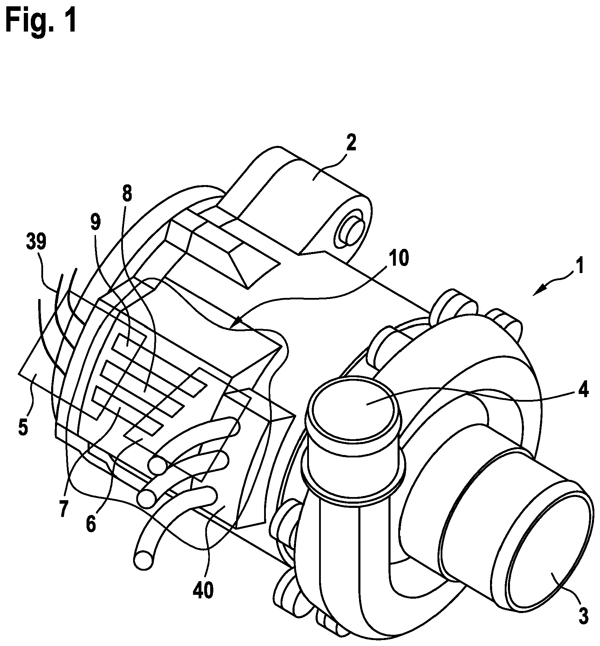

In Figur 1 ist eine Luftzuführvorrichtung 1 perspektivisch dargestellt. Die Luftzuführvorrichtung 1 wird auch als Luftverdichter bezeichnet und dient in einem mobilen Brennstoffzellensystem zur Bereitstellung von verdichteter Luft. Das mobile Brennstoffzellensystem wiederum dient in einem mit dem Brennstoffzellensystem ausgestatteten Kraftfahrzeug zur Bereitstellung von elektrischer Energie, die zum Beispiel über einen Elektromotor in Antriebsenergie für das Kraftfahrzeug umgewandelt wird.

Die Luftzuführvorrichtung 1 umfasst ein mehrteiliges Gehäuse 2 mit einem Luftanschluss 3, über den Luft zugeführt wird, und mit einem Luftanschluss 4, über den verdichtete Luft abgeführt wird. Zum Verdichten der Luft umfasst die Luftzuführvorrichtung 1 zum Beispiel ein Verdichterrad, das innerhalb einer Verdichtervolute drehbar ist.

Der Antrieb des Verdichterrads erfolgt durch einen Elektromotor, der in dem Gehäuse 2 angeordnet ist. Der Elektromotor umfasst einen Rotor, der innerhalb eines Stators drehbar ist.

Der Stator des Elektromotors umfasst eine Stromanschlusseinrichtung 5, über welche dem Stator Wechselstrom in drei Phasen zugeführt wird. Die Stromanschlusseinrichtung 5 ist über eine Verbindungseinrichtung 10, die drei längliche Kontaktteile 7, 8, 9 umfasst, mit einer Steueranschlusseinrichtung 6 verbunden.

Die Steueranschlusseinrichtung 6 ist zum Beispiel mit einem Kabelabgang 40 kombiniert, der, wie durch drei angedeutete abgehende Kabel 39 angedeutet ist, an einen separat angeordneten und in Figur 1 nicht dargestellten Inverter angeschlossen ist. Der Inverter kann aber auch in das Gehäuse 2 der Luftzuführvorrichtung 1 integriert sein. Dann entfällt der Kabelabgang 40.

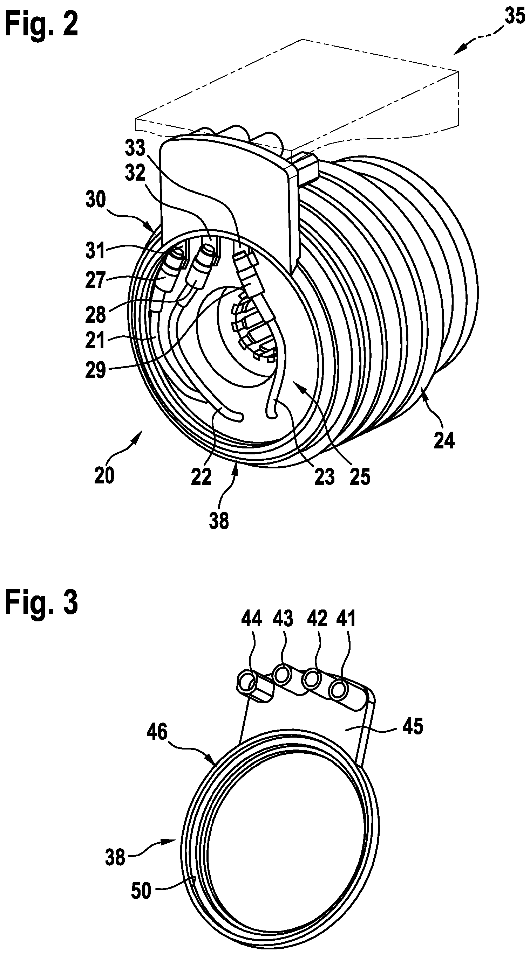

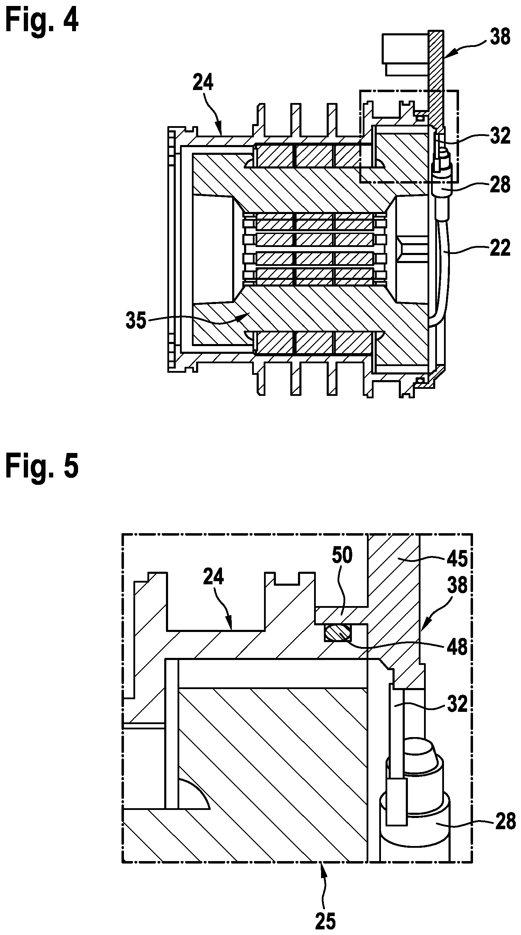

In den Figuren 2 und 4 ist eine Statoranordnung 20 mit einem Stator 25 in verschiedenen Ansichten dargestellt. Der Stator 25 ist in einem Statoraufnahmeraum einer Kühlhülse 24 angeordnet.

Der Stator 25 umfasst einen Statorgrundkörper mit Statoreisen, Statorwicklungen und Wickelköpfen, deren Aufbau und Funktion bekannt sind. Innerhalb des Stators 25 ist ein nicht dargestellter Rotor angeordnet, der zur Darstellung eines elektromotorischen Antriebs der in Figur 1 dargestellten Luftzuführvorrichtung dient.

Die Kühlhülse 24 ist vorteilhaft zusammen mit einer Hochvoltelektronik 35, die in Figur 2 nur angedeutet ist, innerhalb eines gemeinsamen Gehäuses der als Luftverdichter ausgeführten Luftzuführvorrichtung angeordnet. An ihrem äußeren Umfang wird die Kühlhülse vorteilhaft von einem Kühlmedium, wie Kühlwasser, umströmt. Die Kühlhülse 24 dient zur Darstellung einer Kühlung für den Stator 25, der sich im Betrieb bei sehr hohen Rotordrehzahlen von über einhunderttausend Umdrehungen pro Minute stark erwärmen kann.

In Figur 2 sieht man, dass von dem dort sichtbaren Ende des Stators 25 Statorleitungen 21, 22, 23 ausgehen. Die Statorleitungen 21 bis 23 sind über eine Hochvoltschnittstelle 30 elektrisch mit der Hochvoltelektronik 35 verbunden. Die Hochvoltelektronik 35 umfasst zum Beispiel einen Inverter.

Die Hochvoltschnittstelle 30 ist mir einer Zentriereinrichtung 38 kombiniert. Die Zentriereinrichtung 38 umfasst einen Ringkörper 46, der vollflächig an einer in Figur 4 rechten Stirnfläche der Kühlhülse 24 anliegt. Von dem Ringkörper 46 der Zentriereinrichtung 38 erstreckt sich ein Verbindungsabschnitt 45 in radialer Richtung nach außen.

An dem Verbindungsabschnitt 45 sind vier Anschlusshülsen 41 bis 44 ausgebildet, die im Wesentlichen die Gestalt von geraden Kreiszylindermänteln haben. Die Anschlusshülsen 41 bis 44 erstrecken sich in axialer Richtung.

Der Begriff axial bezieht sich auf eine Drehachse eines in dem Stator 25 drehbaren Rotors. Axial bedeutet in Richtung oder parallel zu dieser Drehachse. Analog bedeutet der Begriff radial quer zu dieser Drehachse.

Kabelenden 27 bis 29 der Statorleitungen 21 bis 23 sind innerhalb des Ringkörpers 36 an Kontaktzungen 31, 32, 33 angeschlossen, die radial nach innen aus dem Ringkörper 46 herausragen. Den Kabelenden 27 bis 29 sind auf der Inverterseite die Anschlusshülsen 41 bis 43 zugeordnet. Die vierte Anschlusshülse 44 dient zur Darstellung einer weiteren Funktion, auf die hier nicht eingegangen wird.

In den Figuren 3 und 4 sieht man, dass die Zentriereinrichtung 38 einen Zentrierring 50 aufweist, der im Wesentlichen die Gestalt eines geraden Kreiszylindermantelabschnitts aufweist. Der Zentrierring 50 ist, wie sich aus einer Zusammenschau der Figuren 2 bis 4 ergibt, vollumfänglich an einem Außendurchmesser der Kühlhülse 24 zentriert.

Zur Abdichtung ist die Verbindung zwischen dem Zentrierring 50, der Zentriereinrichtung 38 und dem Außenumfang der Kühlhülse 24 als Pressverband ausgeführt. Alternativ oder zusätzlich ist ein radialer O-Ring 48 zur Abdichtung zwischen der Kühlhülse 24 und dem Zentrierring 50 der Zentriereinrichtung 38 vorgesehen.

## Patentansprüche

1. Statoranordnung (20) mit einer Hochvoltschnittstelle (30) zur Darstellung einer elektrischen Verbindung zwischen einem Stator (25) und einer Hochvoltelektronik (35), wobei die Hochvoltschnittstelle (30) mit einer Zentriereinrichtung (38) kombiniert ist, die an einer Kühlhülse (24) zentriert ist, die einen Statoraufnahmeraum für den Stator (25) umfasst, wobei die Zentriereinrichtung (38) einen Ringkörper (46) umfasst, mit dem die Zentriereinrichtung (38) an einem Ende der Kühlhülse (24) befestigt ist, und wobei der Ringkörper (46) einen Zentrierring (50) aufweist, mit dem die Zentriereinrichtung (38) vollumfänglich an einem Außendurchmesser der Kühlhülse (24) zentriert ist, **dadurch gekennzeichnet, dass** der Zentrierring (50) der Zentriereinrichtung (38) kraftschlüssig mit der Kühlhülse (24) verbunden ist.

2. Statoranordnung nach Anspruch 1, **dadurch gekennzeichnet, dass** ein radialer O-Ring (48) zur Abdichtung zwischen der Kühlhülse (24) und dem Zentrierring (50) angeordnet ist.

3. Statoranordnung nach einem der vorhergehenden Ansprüche, **dadurch gekennzeichnet, dass** der Ringkörper (46) vollflächig an einer Stirnfläche der Kühlhülse (24) anliegt.

4. Statoranordnung nach einem der vorhergehenden Ansprüche, **dadurch gekennzeichnet, dass** sich ein Verbindungsabschnitt (45) von dem Ringkörper (46) radial nach außen erstreckt.

5. Statoranordnung nach Anspruch 4, **dadurch gekennzeichnet, dass** radial außen an dem Verbindungsabschnitt (45) Anschlusshülsen (41-44) angeordnet sind, die sich von dem Verbindungsabschnitt (45) in axialer Richtung erstrecken.

6. Verfahren zum Herstellen einer Statoranordnung (20) nach einem der vorhergehenden Ansprüche, **dadurch gekennzeichnet, dass** der Stator (25) mit der Zentriereinrichtung (38) an der Kühlhülse (24) zentriert wird, bevor der Stator (25) mit der Hochvoltschnittstelle (30) vergossen und/oder umspritzt wird.

## Claims

1. Stator arrangement (20) having a high-voltage interface (30) for producing an electrical connection between a stator (25) and a high-voltage electronic system (35), wherein the high-voltage interface (30) is combined with a centring device (38) which is centred on a cooling sleeve (24) which comprises a stator-receiving chamber for the stator (25), wherein the centring device (38) comprises an annular body (46) with which the centring device (38) is fastened to one end of the cooling sleeve (24), and wherein the annular body (46) has a centring ring (50) with which the centring device (38) is completely centred on an outer diameter of the cooling sleeve (24), **characterized in that** the centring ring (50) of the centring device (38) is connected to the cooling sleeve (24) with a force fit.

2. Stator arrangement according to Claim 1, **characterized in that** a radial O-ring (48) is arranged for sealing between the cooling sleeve (24) and the centring ring (50).

3. Stator arrangement according to any one of the preceding claims, **characterized in that** the annular body (46) completely bears against an end face of the cooling sleeve (24).

4. Stator arrangement according to any one of the preceding claims, **characterized in that** a connection portion (45) extends radially outwards from the annular body (46).

5. Stator arrangement according to Claim 4, **characterized in that** connecting sleeves (41-44) are arranged radially on the outside of the connection portion (45) and extend from the connection portion (45) in the axial direction.

6. Method for producing a stator arrangement (20) according to any one of the preceding claims, **characterized in that** the stator (25) with the centring device (38) is centred on the cooling sleeve (24) before the stator (25) is cast and/or overmoulded with the high-voltage interface (30).

## Revendications

1. Ensemble stator (20) avec une interface haute tension (30) destinée à former une liaison électrique entre un stator (25) et une électronique haute tension (35), l'interface haute tension (30) étant combinée à un dispositif de centrage (38) qui est centré sur un manchon de refroidissement (24) qui comprend un espace de réception de stator pour le stator (25), le dispositif de centrage (38) comprenant un corps annulaire (46), avec lequel le dispositif de centrage (38) est fixé sur une extrémité du manchon de refroidissement (24), et le corps annulaire (46) comportant une bague de centrage (50), avec laquelle le dispositif de centrage (38) est centré complètement en périphérique sur un diamètre extérieur du manchon de refroidissement (24), **caractérisé en ce que** la bague de centrage (50) du dispositif de centrage (38) est reliée à force au manchon de refroidissement (24).

2. Ensemble stator selon la revendication 1, **caractérisé en ce qu'**un joint torique radial (48) est disposé pour assurer l'étanchéité entre le manchon de refroidissement (24) et la bague de centrage (50).

3. Ensemble stator selon l'une des revendications précédentes, **caractérisé en ce que** le corps annulaire (46) repose sur toute sa surface sur une face frontale du manchon de refroidissement (24).

4. Ensemble stator selon l'une des revendications précédentes, **caractérisé en ce qu'**une section de liaison (45) s'étend radialement vers l'extérieur depuis le corps annulaire (46).

5. Ensemble stator selon la revendication 4, **caractérisé en ce que** des manchons de raccordement (41-44) s'étendant depuis la section de liaison (45) dans la direction axiale sont disposés radialement à l'extérieur sur la section de liaison (45).

6. Procédé de fabrication d'un ensemble stator (20) selon l'une des revendications précédentes, **caractérisé en ce que** le stator (25) est centré sur le manchon de refroidissement (24) avec le dispositif de centrage (38) avant que le stator (25) ne soit coulé et/ou enrobé par injection avec l'interface haute tension (30).
